# EUROPEAN PATENT SPECIFICATION

(11) **EP 4 610 373 B1**
(45) Date of publication and mention of the grant of the patent: **30.09.2026**
(21) Application number: 23907129.3
(22) Date of filing: 21.12.2023
(51) Int. Cl.: C21B 9/00, C21B 9/04, C21B 9/14

(54) **METHOD AND DEVICE FOR CONTROLLING COMBUSTION IN HOT AIR FURNACE**
VERFAHREN UND VORRICHTUNG ZUR STEUERUNG DER VERBRENNUNG IN EINEM HEISSLUFTOFEN
PROCÉDÉ ET DISPOSITIF DE COMMANDE DE COMBUSTION DANS UN FOUR À VENT CHAUD

(30) Priority: 23.12.2022 JP 2022207134
(43) Date of publication of application: 03.09.2025
(73) Proprietor: JFE Steel Corporation, Tokyo 100-0011 (JP)
(72) Inventor: KUDOH, Ichiro, Tokyo 100-0011 (JP); KAISE, Tatsuya, Tokyo 100-0011 (JP)
(74) Representative: Hoffmann Eitle
(86) International application number: PCT/JP2023/045856
(87) International publication number: WO 2024/135769

(56) References cited:
- CN-A- 112 795 716
- JP-A- 2018 178 174
- JP-A- H10 226 808
- JP-A- H10 226 809
- JP-A- H10 226 809

## Description

### Field

The present invention relates to a combustion control method and a combustion control device for a hot blast stove that supplies hot blast to a blast furnace. Background

Patent Literature 1 describes a combustion control method for a hot blast stove for maintaining the temperature of hot blast supplied to a blast furnace by increasing the amount of supplied gas to compensate for a shortage of the combustion time in a case where a shortage of the combustion time occurs due to an equipment issue. Patent literature JP H10 226809 A further discloses an alternative method and device for controlling the combustion in a hot air furnace.

### Citation List

### Patent Literature

Patent Literature 1: JP H10-226808 A

### Summary

### Technical Problem

Even if the amount of gas supplied to a hot blast stove is regularly managed, excessive heat or insufficient heat of the hot blast stove may occur due to error factors such as a change in the calorific value of gas or a decrease in the heat storage capacity due to clogging in heat storage bricks in the hot blast stove. In a case where excessive heat is generated, the gas is excessively supplied to the hot blast stove, and thus the operation cost is deteriorated. On the other hand, in the case of insufficient heat, the blast temperature decreases, and the condition of the blast furnace deteriorates due to a decrease in the temperature of the blast furnace.

The present invention has been made in view of the above disadvantages, and an object of the invention is to provide a combustion control method and a combustion control device for a hot blast stove capable of suppressing the occurrence of excessive heat or insufficient heat in the hot blast stove.

### Solution to Problem

A combustion control method for a hot blast stove according to the present invention is a combustion control method for a hot blast stove having a combustion step of storing, in a regenerator, a quantity of heat input by combusting a mixed gas, and a blast sending step of generating hot blast by supplying cold blast into the regenerator and supplying the generated hot blast to a blast furnace, the combustion control method including the steps of: calculating an actual value of the quantity of heat as an actual quantity of heat input Qᵢₙ by using the following Equation (1); calculating a quantity of heat deprived of by generating the hot blast as an actual quantity of heat output Qₒᵤₜ by using the following Equation (2); calculating an actual value of thermal efficiency of the hot blast stove as an actual thermal efficiency η by using the following Equation (3); calculating a quantity of heat to be input when hot blast is generated next time as a required quantity of heat input Q_{inHS} by using the following Equation (4); calculating a quantity of the mixed gas V_{M_B} to be supplied when the hot blast is generated next time by using the following Equation (5); and controlling the hot blast stove based on the calculated quantity of the mixed gas V_{M_B}. ${Q}_{in} = {\sum }_{{t}_{A}} \left(\begin{matrix}{k}_{M} \times {V}_{M} + {T}_{AIR} \times {C}_{AIR} \times {V}_{AIR} \times 1000 / 22.4 \times {M}_{AIR} \\ + {T}_{M} \times {C}_{M} \times {V}_{M} \times 1000 / 22.4 \times {M}_{M}\end{matrix}\right)$
t_{A}: combustion duration [min], k_{M}: M gas calorie [J/Nm³],
V_{M}: M gas flow rate [Nm³/min], T_{AIR}: combustion air temperature,
C_{AIR}: combustion air specific heat [J/g/°C],
V_{AIR}: combustion air flow rate [Nm³/min],
M_{AIR}: combustion air specific heat [J/g/°C],
T_{M}: M gas temperature [°C], C_{M}: M gas specific heat [J/g/°C],
V_{M}: M gas flow rate [Nm³/min],
M_{M}: M gas molecular weight [g/mol]
${Q}_{out} = {\sum }_{{t}_{B}} \left\{\begin{matrix}\left({T}_{b}\times {C}_{bN 2}-{T}_{c}\times {C}_{CN 2}\right) \times {V}_{b} \times 0.79 \times 1000 / 22.4 \\ \times {M}_{N 2} + \left({T}_{b}\times {C}_{bO 2}-{T}_{c}\times {C}_{CO 2}\right) \\ \times \left({V}_{b}\times 0.21+{V}_{O 2}-{V}_{OXY}\right) \times 1000 / 22.4 \times {M}_{O 2} \\ + \left({T}_{b}\times {C}_{bmoi}-{T}_{C}\times {C}_{Cmoi}\right) \times \left({V}_{b}\times moi\right)\end{matrix}\right\}$
t_{B}: blast duration [min], T_{b}: blast temperature [°C],
C_{bN2}: N₂ specific heat corresponding to 1200°C [J/g/°C],
T_{C}: cold blast temperature [°C],
C_{CN2}: N₂ specific heat corresponding to 200°C [J/g/°C],
Vb: blast flow rate [Nm³/min],
M_{N2}: N₂ molecular weight [g/mol],
C_{bO2}: O₂ specific heat corresponding to 1200°C [J/g/°C],
C_{CO2}: O₂ specific heat corresponding to 200°C [J/g/°C],
V_{O2}: total O₂ flow rate O₂ [Nm³/min],
V_{OXY}: oxygen flow rate [Nm³/min], M_{O2}: O₂ specific heat [J/g/°C],
C_{bmoi}: vapor specific heat corresponding to 1200°C [J/g/°C],
C_{Cmoi}: vapor specific heat corresponding to 200°C [J/g/°C],
moi: blast moisture [g/Nm³]
$η = {Q}_{out} / {Q}_{in}$
${Q}_{inHS} = {Q}_{out} / η$
$\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$ α: air-fuel ratio

The combustion control method may includes the steps of: calculating an estimation value Q_{out estimation} of the quantity of heat to be deprived of by generating the hot blast by using the following Equation (6) in a case where blast specifications of the blast furnace are modified; calculating a quantity of heat required for obtaining the estimation value Q_{out estimation} of the quantity of heat as a required quantity of heat input Q_{in estimation} by using the following Equation (7); and controlling the hot blast stove based on the calculated required quantity of heat input Q_{in estimation}.
$\begin{matrix}{Q}_{out estimation} \\ = {\sum }_{{t}_{B}} \left\{\begin{matrix}\left({T}_{b set}\times {C}_{bN 2}-{T}_{c}\times {C}_{CN 2}\right) \times {V}_{b set} \times 0.79 \times 1000 / 22.4 \times {M}_{N 2} \\ + \left({T}_{b set}\times {C}_{bO 2}-{T}_{C}\times {C}_{CO 2}\right) \times \left({V}_{b set}\times 0.21+{V}_{O 2 set}-{V}_{OXY set}\right) \\ \times 1000 / 22.4 \times {M}_{O 2} + \left({T}_{b set}\times {C}_{bmoi}-{T}_{C}\times {C}_{Cmoi}\right) \times \left({V}_{b set}\times moi\right)\end{matrix}\right\}\end{matrix}$
T_{b set}: blast temperature set value,
V_{b set}: blast flow rate set value,
V_{O2 set}: total oxygen flow rate set value,
V_{OXY set}: oxygen flow rate set value
${Q}_{in estimation} = {Q}_{out estimation} / η$

The combustion control method may include the steps of: calculating a correction amount α of the actual thermal efficiency η by using an opening degree of a ventilation butterfly valve provided between the regenerator and a blower that supplies the cold blast to the regenerator after the blast sending step is finished; calculating a correction value η_{correction} of the actual thermal efficiency η by using the following Equation (8); and using the calculated correction value η_{correction} for subsequent processing.
${η}_{correction} = η \pm α$

A combustion control device for a hot blast stove having a combustion step of storing, in a regenerator, a quantity of heat input by combusting a mixed gas, and a blast sending step of generating hot blast by supplying cold blast into the regenerator and supplying the generated hot blast to a blast furnace according to the present invention includes a control unit configured to: calculate an actual value of the quantity of heat as an actual quantity of heat input Qᵢₙ by using the following Equation (1); calculate a quantity of heat deprived of by generating the hot blast as an actual quantity of heat output Qₒᵤₜ by using the following Equation (2); calculate an actual value of thermal efficiency of the hot blast stove as an actual thermal efficiency η by using the following Equation (3); calculate a quantity of heat to be input when hot blast is generated next time as a required quantity of heat input Q_{inHS} by using the following Equation (4); calculate a quantity of the mixed gas V_{M_B} to be supplied when the hot blast is generated next time by using the following Equation (5); and control the hot blast stove based on the calculated quantity of the mixed gas V_{M_B}.
${Q}_{in} = {\sum }_{{t}_{A}} \left(\begin{matrix}{k}_{M} \times {V}_{M} + {T}_{AIR} \times {C}_{AIR} \times {V}_{AIR} \times 1000 / 22.4 \times {M}_{AIR} \\ + {T}_{M} \times {C}_{M} \times {V}_{M} \times 1000 / 22.4 \times {M}_{M}\end{matrix}\right)$
t_{A}: combustion duration [min], k_{M}: M gas calorie [J/Nm³],
V_{M}: M gas flow rate [Nm³/min], T_{AIR}: combustion air temperature,
C_{AIR}: combustion air specific heat [J/g/°C],
V_{AIR}: combustion air flow rate [Nm³/min],
M_{AIR}: combustion air specific heat [J/g/°C],
T_{M}: M gas temperature [°C], C_{M}: M gas specific heat [J/g/°C],
V_{M}: M gas flow rate [Nm³/min],
M_{M}: M gas molecular weight [g/mol]
${Q}_{out} = {\sum }_{{t}_{B}} \left\{\begin{matrix}\left({T}_{b}\times {C}_{bN 2}-{T}_{c}\times {C}_{CN 2}\right) \times {V}_{b} \times 0.79 \times 1000 / 22.4 \\ \times {M}_{N 2} + \left({T}_{b}\times {C}_{bO 2}-{T}_{c}\times {C}_{CO 2}\right) \\ \times \left({V}_{b}\times 0.21+{V}_{O 2}-{V}_{OXY}\right) \times 1000 / 22.4 \times {M}_{O 2} \\ + \left({T}_{b}\times {C}_{bmoi}-{T}_{C}\times {C}_{Cmoi}\right) \times \left({V}_{b}\times moi\right)\end{matrix}\right\}$
t_{B}: blast duration [min], T_{b}: blast temperature [°C],
C_{bN2}: N₂ specific heat corresponding to 1200°C [J/g/°C],
T_{C}: cold blast temperature [°C],
C_{CN2}: N₂ specific heat corresponding to 200°C [J/g/°C],
Vb: blast flow rate [Nm³/min],
M_{N2}: N₂ molecular weight [g/mol],
C_{bO2}: O₂ specific heat corresponding to 1200°C [J/g/°C],
C_{CO2}: O₂ specific heat corresponding to 200°C [J/g/°C],
V_{O2}: total O₂ flow rate [Nm³/min],
V_{OXY}: oxygen flow rate [Nm³/min], M_{O2}: O₂ specific heat [J/g/°C],
C_{bmoi}: vapor specific heat corresponding to 1200°C [J/g/°C],
C_{Cmoi}: vapor specific heat corresponding to 200°C [J/g/°C],
moi: blast moisture [g/Nm³]
$η = {Q}_{out} / {Q}_{in}$
${Q}_{inHS} = {Q}_{out} / η$
$\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$ α: air-fuel ratio

### Advantageous Effects of Invention

According to the combustion control method and the combustion control device for a hot blast stove according to the present invention, it is possible to suppress occurrence of excessive heat or insufficient heat in the hot blast stove.

### Brief Description of Drawings

FIG. 1 is a schematic view illustrating the configuration of a hot blast stove according to an embodiment of the present invention.
FIG. 2 is a diagram for describing an operation of a hot blast stove illustrated in FIG. 1.
FIG. 3 is a flowchart illustrating a flow of combustion control processing as an embodiment of the present invention.
FIG. 4 is a flowchart illustrating the flow of the combustion control processing when blast specifications are modified.
FIG. 5 is a diagram illustrating an example of daily transition of the fuel base unit in a case where the combustion control processing according to an embodiment of the present invention is executed and a case where the combustion control processing is not executed.
FIG. 6 is a flowchart illustrating a flow of a modification of the combustion control processing illustrated in FIG. 3.
FIG. 7 is a diagram illustrating an example of a relationship between the opening degree of a ventilation butterfly valve and whether or not an actual thermal efficiency η is corrected.
FIG. 8 is a diagram illustrating an example of changes in the quantity of heat output, the quantity of heat input, and the M gas flow rate in a case where the blast flow rate in a blast furnace is reduced after introduction of the present invention.
FIG. 9 is a diagram illustrating an example of a relationship between the quantity of heat output and the quantity of heat input in a case where the blast flow rate in the blast furnace is reduced before and after introduction of the present invention.

### Description of Embodiments

Hereinafter, a combustion control method and a combustion control device for a hot blast stove according to an embodiment of the present invention will be described with reference to the drawings.

### [Configuration]

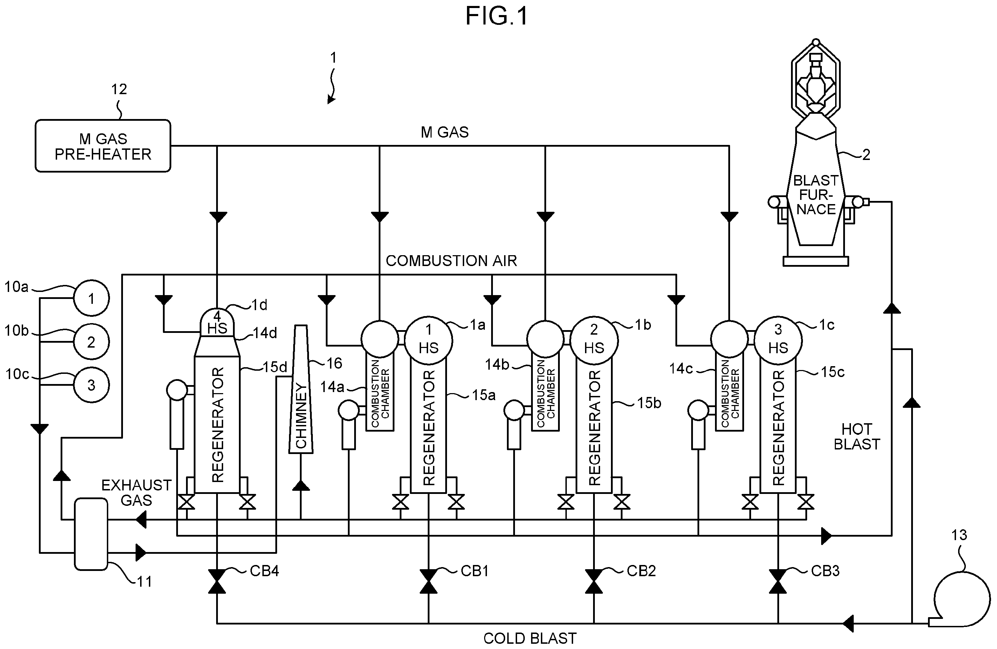

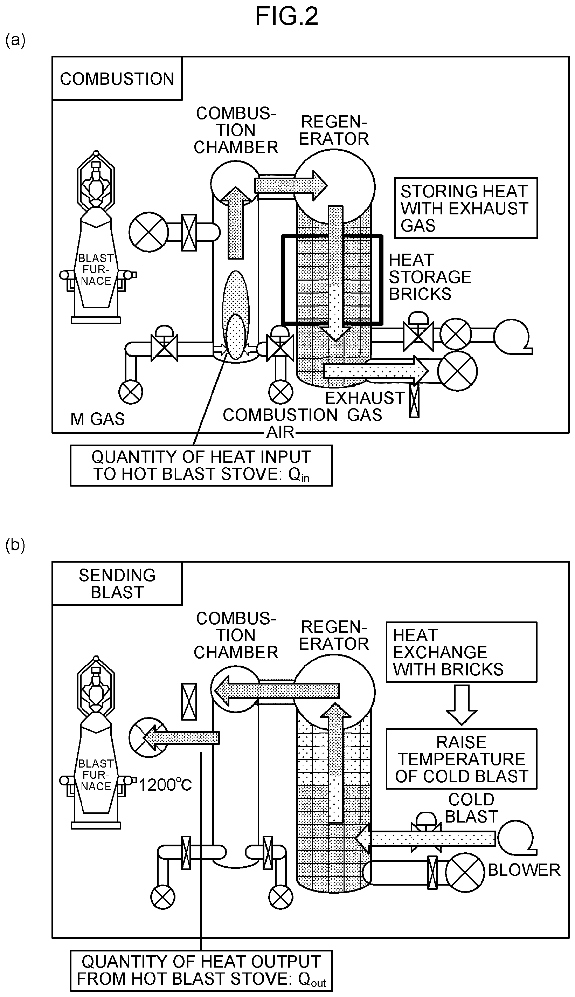

First, by referring to FIGS. 1 and 2, the configuration of the hot blast stove as an embodiment of the present invention will be described. FIG. 1 is a schematic view illustrating the configuration of the hot blast stove according to the embodiment of the present invention. FIG. 2 is a diagram for describing the operation of the hot blast stove illustrated in FIG. 1.

As illustrated in FIG. 1, a hot blast stove 1 according to an embodiment of the present invention includes four hot blast stoves 1a to 1d that supply hot blast to a blast furnace 2 and includes combustion blowers 10a to 10c, a heat exchanger 11, an M gas pre-heater 12, a blower 13, combustion chambers 14a to 14d, and regenerators 15a to 15d. Although the hot blast stove 1 illustrated in FIG. 1 performs parallel operation by the four hot blast stoves 1a to 1d, the present invention is not limited to the present embodiment but can be applied to a hot blast stove regardless of whether the hot blast stove is of the internal combustion type or the external combustion type.

The combustion blowers 10a to 10c supply air to the heat exchanger 11.

The heat exchanger 11 exchanges heat between the air supplied from the combustion blowers 10a to 10c and gas (exhaust gas) discharged from the regenerators 15a to 15d to heat the air to generate combustion air and supplies the generated combustion air to the combustion chambers 14a to 14d.

The M gas pre-heater 12 preheats a mixed gas (M gas) such as coke gas or converter gas and supplies the preheated mixed gas to the combustion chambers 14a to 14d.

The blower 13 supplies cold blast to the regenerators 15a to 15d. The volume of air blown to the regenerators 15a to 15d can be adjusted by controlling the opening degrees of the ventilation butterfly valves CB1 to CB4 provided between the blower 13 and the regenerators 15a to 15d, respectively.

The combustion chambers 14a to 14d burn the M gas using the combustion air supplied from the heat exchanger 11, and heat storage bricks inside the regenerators 15a to 15d are heated by the combustion exhaust gas.

The regenerators 15a to 15d raise the temperature of the cold blast supplied from the blower 13 by the heat storage bricks having been heated to generate hot blast and supply the generated hot blast to the blast furnace 2.

When hot blast is supplied to the blast furnace 2 using the hot blast stove 1 having such a configuration, first, as illustrated in FIG. 2(a), the M gas is combusted using the combustion air supplied from the heat exchanger 11 in the combustion chambers 14a to 14d, and heat storage bricks in the regenerators 15a to 15d are heated by the combustion exhaust gas (combustion step). That is, in the combustion step, the heat storage bricks are heated to input a heat quantity Q_{IN} to the hot blast stove 1 (heat storage). Then, as illustrated in FIG. 2(b), the regenerators 15a to 15d raise the temperature of the cold blast supplied from the blower 13 by the heat storage bricks having been heated to generate hot blast and supply the generated hot blast to the blast furnace 2 (blast sending step). That is, in the blast sending step, a heat quantity Qₒᵤₜ is output from the hot blast stove 1 with the heated heat storage bricks generating hot blast.

### [Combustion Control Method]

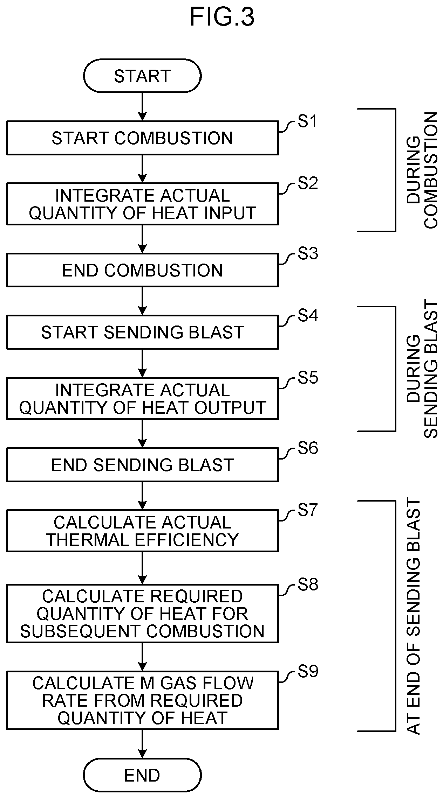

In the hot blast stove 1 having such a configuration, a control device configured by a computer or the like executes combustion control processing described below to suppress occurrence of excessive heat or insufficient heat. Hereinafter, the operation of the control device when executing the combustion control processing will be described with reference to FIG. 3.

FIG. 3 is a flowchart illustrating the flow of the combustion control processing as an embodiment of the present invention. The flowchart illustrated in FIG. 3 starts at the timing when the start of operation of the hot blast stove 1 is instructed, and the combustion control processing proceeds to processing of Step S1.

In the processing of Step S1, the control device starts the combustion step. As a result, the processing of Step S1 is completed, and the combustion control processing proceeds to processing of Step S2.

In the processing of Step S2, the control device calculates the actual value of the quantity of heat input to the hot blast stove as an actual quantity of heat input Qᵢₙ by integrating the quantity of heat input into the hot blast stove. Specifically, the control device uses the following Equation (1) to calculate the actual quantity of heat input Qᵢₙ. That is, the control device calculates the total value of the M gas input heat quantity, the combustion air latent heat quantity, and the M gas latent heat quantity as the actual quantity of heat input Qᵢₙ. As a result, the processing of Step S2 is completed, and the combustion control processing proceeds to processing of Step S3.
${Q}_{in} = {\sum }_{{t}_{A}} \left(\begin{matrix}{k}_{M} \times {V}_{M} + {T}_{AIR} \times {C}_{AIR} \times {V}_{AIR} \times 1000 / 22.4 \times {M}_{AIR} \\ + {T}_{M} \times {C}_{M} \times {V}_{M} \times 1000 / 22.4 \times {M}_{M}\end{matrix}\right)$
t_{A}: combustion duration [min], k_{M}: M gas calorie [J/Nm³],
V_{M}: M gas flow rate [Nm³/min], T_{AIR}: combustion air temperature,
C_{AIR}: combustion air specific heat [J/g/°C],
V_{AIR}: combustion air flow rate [Nm³/min],
M_{AIR}: combustion air specific heat [J/g/°C],
T_{M}: M gas temperature [°C], C_{M}: M gas specific heat [J/g/°C],
V_{M}: M gas flow rate [Nm³/min],
M_{M}: M gas molecular weight [g/mol]

In the processing of Step S3, the control device ends the combustion step. As a result, the processing of Step S3 is completed, and the combustion control processing proceeds to processing of Step S4.

In the processing of Step S4, the control device starts the blast sending step. As a result, the processing of Step S4 is completed, and the combustion control processing proceeds to processing of Step S5.

In the processing of Step S5, the control device calculates the actual value of the quantity of heat output of the hot blast stove as the actual quantity of heat output Qₒᵤₜ by integrating the quantity of heat output of the hot blast stove. Specifically, the control device uses the following Equation (2) to calculate the actual quantity of heat output Qₒᵤₜ. That is, the control device calculates the total value of the nitrogen sensible heat quantity, the oxygen sensible heat quantity, and the blown moisture sensible heat quantity as the actual quantity of heat output Qₒᵤₜ. As a result, the processing of Step S5 is completed, and the combustion control processing proceeds to processing of Step S6.
${Q}_{out} = {\sum }_{{t}_{B}} \left\{\begin{matrix}\left({T}_{b}\times {C}_{bN 2}-{T}_{c}\times {C}_{CN 2}\right) \times {V}_{b} \times 0.79 \times 1000 / 22.4 \\ \times {M}_{N 2} + \left({T}_{b}\times {C}_{bO 2}-{T}_{c}\times {C}_{CO 2}\right) \\ \times \left({V}_{b}\times 0.21+{V}_{O 2}-{V}_{OXY}\right) \times 1000 / 22.4 \times {M}_{O 2} \\ + \left({T}_{b}\times {C}_{bmoi}-{T}_{C}\times {C}_{Cmoi}\right) \times \left({V}_{b}\times moi\right)\end{matrix}\right\}$
t_{B}: blast duration [min], T_{b}: blast temperature [°C],
C_{bN2}: N₂ specific heat corresponding to 1200°C [J/g/°C],
T_{C}: cold blast temperature [°C],
C_{CN2}: N₂ specific heat corresponding to 200°C [J/g/°C],
Vb: blast flow rate [Nm³/min],
M_{N2}: N₂ molecular weight [g/mol],
C_{bO2}: O₂ specific heat corresponding to 1200°C [J/g/°C],
C_{CO2}: O₂ specific heat corresponding to 200°C [J/g/°C],
V_{O2}: total O₂ flow rate [Nm³/min],
V_{OXY}: oxygen flow rate [Nm³/min], M_{O2}: O₂ specific heat [J/g/°C],
C_{bmoi}: vapor specific heat corresponding to 1200°C [J/g/°C],
C_{Cmoi}: vapor specific heat corresponding to 200°C [J/g/°C],
moi: blast moisture [g/Nm³]

In the processing of Step S6, the control device ends the blast sending step. As a result, the processing of Step S6 is completed, and the combustion control processing proceeds to processing of Step S7.

In the processing of Step S7, the control device substitutes the actual quantity of heat input Qᵢₙ calculated in the processing of Step S2 and the actual quantity of heat output Qₒᵤₜ calculated in the processing of Step S5 into the following Equation (3) to calculate the actual value of a thermal efficiency η as the actual thermal efficiency η. As a result, the processing of Step S7 is completed, and the combustion control processing proceeds to processing of Step S8.
$η = {Q}_{out} / {Q}_{in}$

In the processing of Step S8, the control device substitutes the actual quantity of heat output Qₒᵤₜ calculated in the processing of Step S5 and the actual thermal efficiency η calculated in the processing of Step S7 into the following Equation (4) to calculate the quantity of heat to be input to the hot blast stove in a subsequent combustion step as a required quantity of heat input Q_{inHS}. As a result, the processing of Step S8 is completed, and the combustion control processing proceeds to processing of Step S9.
${Q}_{inHS} = {Q}_{out} / η$

In the processing of Step S9, the control device substitutes the required quantity of heat input Q_{inHS} calculated in the processing of Step S8 into the following Equation (5) to calculate the flow rate V_{M_B} of the M gas required for inputting the required quantity of heat input Q_{inHS}. As a result, the processing of Step S9 is completed, and the series of combustion control processing ends. $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$ α: **air-fuel ratio**

As is clear from the above description, in the combustion control processing according to an embodiment of the present invention, the control device calculates the actual value of the quantity of heat input as the actual quantity of heat input Qᵢₙ by using Equation (1), calculates the heat quantity lost by generation of hot blast as the actual quantity of heat output Qₒᵤₜ by using Equation (2), calculates the actual value of the thermal efficiency of the hot blast stove as the actual thermal efficiency η by using Equation (3), calculates the heat quantity to be input at the time of generating hot blast next time as the required quantity of heat input Q_{inHS} by using Equation (4), calculates the quantity V_{M_B} of the mixed gas to be supplied at the time of generating hot blast next time by using Equation (5), and controls the hot blast stove based on the calculated quantity V_{M_B} of the mixed gas, and thus it is possible to suppress occurrence of excessive heat or insufficient heat in the hot blast stove.

In a case where specifications of the blast in the blast furnace is modified due to a sudden decrease in the blast or a decrease in the blast accompanying an adjustment of the quantity of iron production depending on the condition of the blast furnace, the quantity of heat input becomes excessive, and the operation cost increases. In particular, in a case where a sudden decrease in the blast occurs, since the operator manually controls the amount of gas to be input, there is a possibility that appropriate control of the amount of gas to be input is not performed depending on individual differences of operators. Exemplary blast specifications in the blast furnace include a blast flow rate V_{b}, a total O₂ flow rate V_{O2}, a blast temperature T_{b}, a blast humidity moi, and a cold blast temperature T_{c}. At the time of trouble or adjustment of the quantity of iron production, the blast flow rate V_{b} decreases, and the hot blast stove has excessive heat, and thus it is necessary to perform control to reduce the quantity of heat input to the hot blast stove.

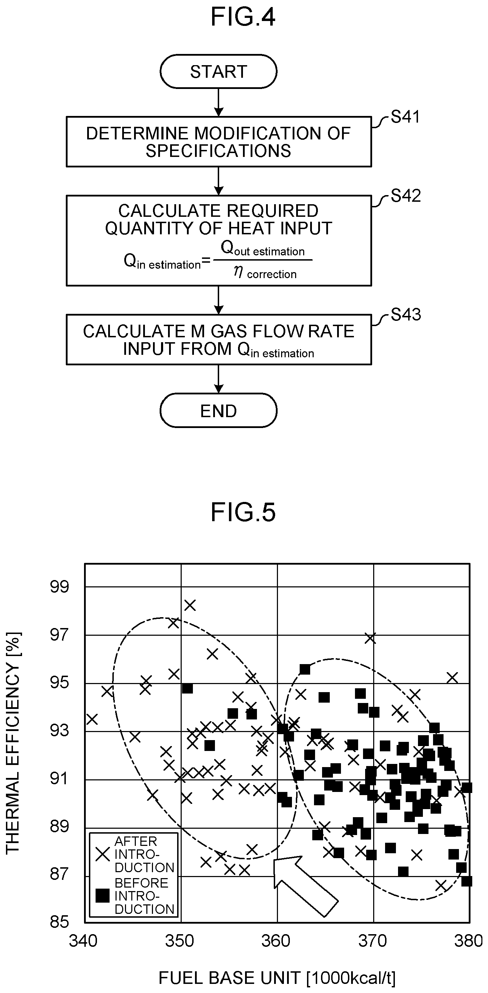

Therefore, in a case where the blast specifications in the blast furnace are modified, it is desirable to control the quantity of heat input to the hot blast stove. Specifically, in this case, as illustrated in the flowchart of FIG. 4, the control device first determines whether or not the blast specifications have been modified (Step S41). In the present embodiment, in a case where the deviation quantity of heat output expressed in the following Equation (9) calculated at the time of modifying the blast specifications is greater than or equal to a predetermined value, the control device determines that the blast specifications have been modified.
$\begin{matrix}Deviation quantity of heat output \\ = \left|{Q}_{out \left(base point\right)}-{Q}_{out estimation}\right|\end{matrix}$
Q_{out (base point)}: quantity of heat output as a reference for
   calculating deviation quantity of heat output
Q_{out estimation}: estimated quantity of heat output after blast
   specifications are modified

Furthermore, in a case where it is determined that the blast specifications have been modified, the control device calculates an estimated quantity of heat output Q_{out estimation} after the blast specifications have been modified by using the following Equation (6) and calculates a required quantity of heat input Q_{in estimation} by substituting the calculated estimated quantity of heat output Q_{out estimation} into the following Equation (7) (Step S42). Then, the control device calculates the flow rate of the M gas to be input to the hot blast stove based on the calculated required quantity of heat input Q_{in estimation} (Step S43).
$\begin{matrix}{Q}_{out estimation} \\ = {\sum }_{{t}_{B}} \left\{\begin{matrix}\left({T}_{b set}\times {C}_{bN 2}-{T}_{c}\times {C}_{CN 2}\right) \times {V}_{b set} \times 0.79 \times 1000 / 22.4 \times {M}_{N 2} \\ + \left({T}_{b set}\times {C}_{bO 2}-{T}_{C}\times {C}_{CO 2}\right) \times \left({V}_{b set}\times 0.21+{V}_{O 2 set}-{V}_{OXY set}\right) \\ \times 1000 / 22.4 \times {M}_{O 2} + \left({T}_{b set}\times {C}_{bmoi}-{T}_{C}\times {C}_{Cmoi}\right) \times \left({V}_{b set}\times moi\right)\end{matrix}\right\}\end{matrix}$
T_{b set}: blast temperature set value,
V_{b set}: blast flow rate set value,
V_{O2 set}: total oxygen flow rate set value,
V_{OXY set}: oxygen flow rate set value
${Q}_{in estimation} = {Q}_{out estimation} / η$

### [Correction of Thermal Efficiency]

FIG. 5 is a diagram illustrating an example of daily transition of the fuel base unit in a case where the combustion control processing according to an embodiment of the present invention is executed and a case where the combustion control processing is not executed. As illustrated in FIG. 5, it was confirmed that the fuel base unit was reduced by executing the combustion control processing according to the embodiment of the present invention. However, even in the case where the combustion control processing according to the embodiment of the present invention has been executed, there were days when the fuel base unit was greatly reduced and days when the fuel base unit was only slightly reduced. Therefore, the inventors of the present invention investigated in detail the operation content on days when the fuel base unit was only slightly decreased. As a result, it has been found that the fuel base unit tends to decrease only slightly on a day when the blast flow rate is decreased for adjustment of the amount of iron production in the blast furnace and a day when the decreased blast flow rate is recovered to the original value. It is conceivable that this is because the heat state of the hot blast stove is different from that in the normal time in an unsteady operation.

Therefore, as a criterion for determining the heat state of the hot blast stove, it is desirable to correct the value of the thermal efficiency η using the opening degrees of the ventilation butterfly valves CB1 to CB4 at the end of sending the blast. Specifically, in parallel operation by the four hot blast stoves 1a to 1d, the heat quantity of a preceding hot blast stove decreases with the lapse of time, and thus, the blast temperature is controlled to be constant by gradually closing the ventilation butterfly valve corresponding to the preceding hot blast stove and raising the opening degree of a ventilation butterfly valve of a succeeding hot blast stove having sufficient furnace heat. Therefore, the heat state of a hot blast stove after the end of the blast sending step can be estimated from the opening degree of the ventilation butterfly valve. For example, in a case where the opening degree of the ventilation butterfly valve at the end of the blast sending step is large, it is conceivable that that heat remains in the hot blast stove even after the end of the blast sending step and that more heat quantity than necessary has been input in the previous combustion step. In a case where the opening degree of the ventilation butterfly valve is large, the hot blast stove is in the state of excessive heat, and thus, if the quantity of heat input in a subsequent combustion step is excessive, the thermal efficiency is deteriorated. On the other hand, in a case where the opening degree of the ventilation butterfly valve is small, the hot blast stove has insufficient heat, and thus the blast temperature that has been set cannot be maintained, which may adversely affect the blast furnace operation.

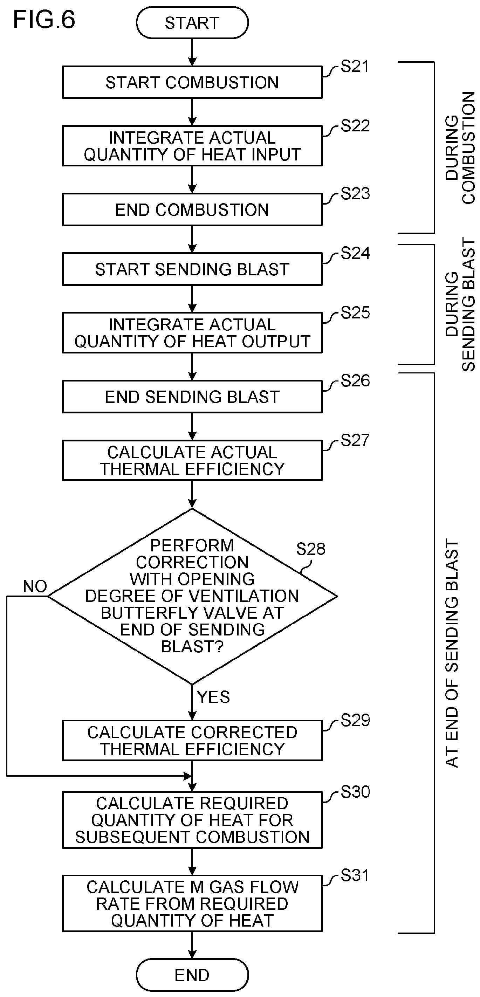

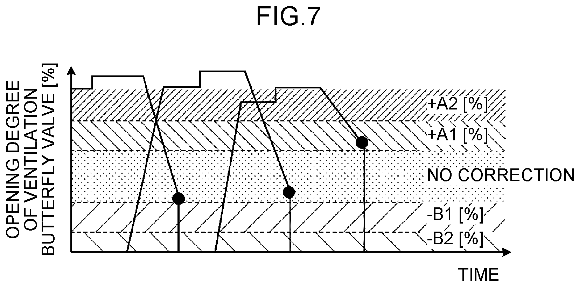

Therefore, as illustrated in the flowchart of FIG. 6, after calculating the actual thermal efficiency η in the processing of Step S27, the control device determines whether or not it is necessary to correct the actual thermal efficiency η by the opening degree of the ventilation butterfly valve (Step S28). In the present embodiment, as illustrated in FIG. 7, a lower low limit opening degree B2, a lower limit opening degree B1, an upper limit opening degree A1, and an upper high limit opening degree A2 are set as the opening degree of a ventilation butterfly valve at the end of the blast sending step. The control device determines whether or not it is necessary to correct the actual thermal efficiency η by the opening degree of a ventilation butterfly valve based on in which of the ranges, illustrated in FIG. 6, the opening degree of the ventilation butterfly valve is at the end of the blast sending step. If it is determined that the actual thermal efficiency η needs to be corrected (Step S28: Yes), the control device corrects the actual thermal efficiency η by the opening degree of the ventilation butterfly valve (Step S29).

Specifically, in a case where the opening degree of the ventilation butterfly valve is small, the control device performs control to compensate for insufficient heat by adding a negative correction value α to the thermal efficiency η using the following Equation (8) to increase the amount of M gas to be input next time. On the other hand, in a case where the opening degree of the ventilation butterfly valve is large, the control device performs control to suppress excessive heat by adding a positive correction value α to the thermal efficiency η using the following Equation (8) to reduce the amount of M gas to be input next time in order to suppress the thermal efficiency deterioration due to excessive heat and excessive input of the M gas. Contrarily, if it is determined that the correction of the actual thermal efficiency η is not necessary (Step S28: No), the control device advances the combustion control processing to the processing of Step S30. Since the content of the processing of Steps S21 to S27 and Steps S30 to S31 illustrated in FIG. 6 is the same as the content of the processing of Steps S1 to S9 illustrated in FIG. 3, the description thereof will be omitted.
${η}_{correction} = η \pm α$

### [Example]

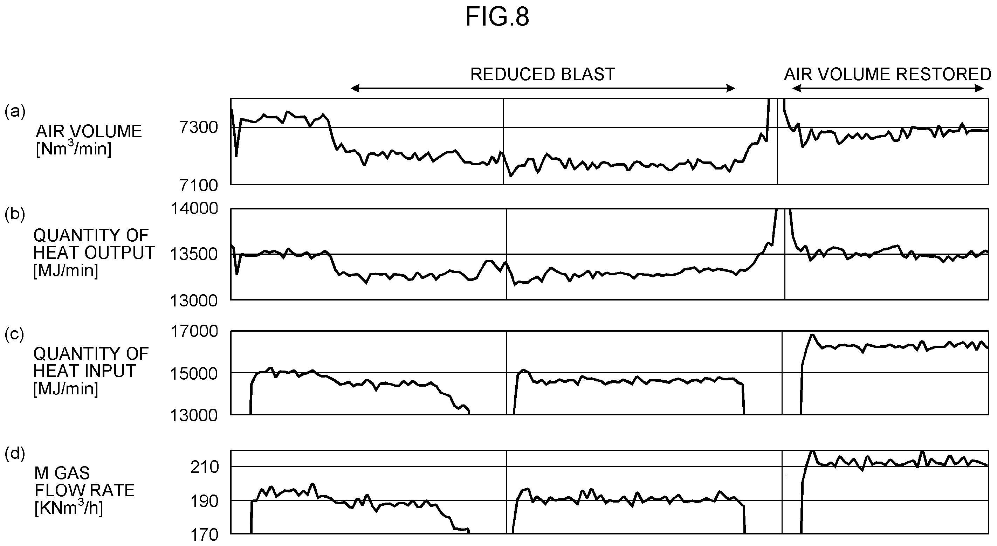

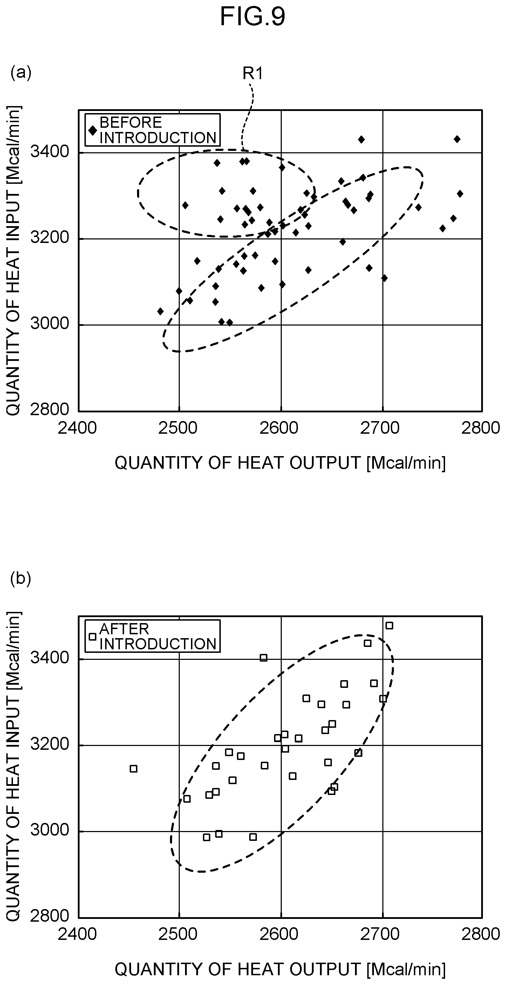

In the present example, the present invention was applied to an operation in which hot blast is supplied from four hot blast stoves having a rated air volume of 7000 Nm³/min and a rated quantity of heat input of 9000 to 10,000 MJ/min to a blast furnace having a volume of 4500 m³. Illustrated in FIGS. 8(a) to 8(d) are exemplary changes in the quantity of heat output, the quantity of heat input, and the M gas flow rate when the blast flow rate of the blast furnace is reduced after introduction of the present invention. In the example illustrated in FIGS. 8(a) to 8(d), correction was performed in such a manner that the thermal efficiency η is 1.5% at the ventilation butterfly valve opening degree of 65% and that the thermal efficiency η is -7.0% at the ventilation butterfly valve opening degree of 50%. As illustrated in FIGS. 8(a) to 8(d), the quantity of heat input decreased as the quantity of heat output decreased due to a decrease in the blast flow rate in the blast furnace. As a result, according to the present invention, it was confirmed that the M gas and the operation cost can be reduced depending on a change in the quantity of heat output. Further illustrated in FIGS. 9(a) and 9(b) is an example of the relationship between the quantity of heat output and the quantity of heat input when the blast flow rate of the blast furnace is decreased before and after the introduction of the present invention. As illustrated in FIG. 9(a), before the introduction of the present invention, there were cases (region R1) where the quantity of heat input cannot be reduced following a decrease in the quantity of heat output depending on individual differences of operators. On the other hand, as illustrated in FIG. 9(b), it was confirmed that the quantity of heat input was successfully reduced following a decrease in the quantity of heat output after the introduction of the present invention.

Although the embodiments applied with the invention made by the present inventors have been described above, the present invention is not limited by the description and the drawings included as a part of the disclosure of the present invention according to the embodiments.

### Industrial Applicability

According to the present invention, it is possible to provide a combustion control method and a combustion control device for a hot blast stove capable of suppressing occurrence of excessive heat or insufficient heat in the hot blast stove.

### Reference Signs List

1, 1a, 1b, 1c, 1d HOT BLAST STOVE
2 BLAST FURNACE
11 HEAT EXCHANGER
12 M GAS PRE-HEATER
13 BLOWER
14a, 14b, 14c, 14d COMBUSTION CHAMBER
15a, 15b, 15c, 15d REGENERATOR
CB1, CB2, CB3, CB4 VENTILATION BUTTERFLY VALVE

## Claims

1. A combustion control method for a hot blast stove having a combustion step of storing, in a regenerator, a quantity of heat input by combusting a mixed gas, and a blast sending step of generating hot blast by supplying cold blast into the regenerator and supplying the generated hot blast to a blast furnace, the combustion control method comprising the steps of:
calculating an actual value of the quantity of heat as an actual quantity of heat input Qᵢₙ by using the following Equation (1);
calculating a quantity of heat deprived of by generating the hot blast as an actual quantity of heat output Qₒᵤₜ by using the following Equation (2);
calculating an actual value of thermal efficiency of the hot blast stove as an actual thermal efficiency η by using the following Equation (3);
calculating a quantity of heat to be input when hot blast is generated next time as a required quantity of heat input Q_{inHS} by using the following Equation (4);
calculating a quantity of the mixed gas V_{M_B} to be supplied when the hot blast is generated next time by using the following Equation (5); and
controlling the hot blast stove based on the calculated quantity of the mixed gas V_{M_B}. ${Q}_{in} = {\sum }_{{t}_{A}} \left(\begin{matrix}{k}_{M} \times {V}_{M} + {T}_{AIR} \times {C}_{AIR} \times {V}_{AIR} \times 1000 / 22.4 \times {M}_{AIR} \\ + {T}_{M} \times {C}_{M} \times {V}_{M} \times 1000 / 22.4 \times {M}_{M}\end{matrix}\right)$
t_{A}: combustion duration [min], k_{M}: M gas calorie [J/Nm³],
V_{M}: M gas flow rate [Nm³/min], T_{AIR}: combustion air temperature,
C_{AIR}: combustion air specific heat [J/g/°C],
V_{AIR}: combustion air flow rate [Nm³/min],
M_{AIR}: combustion air specific heat [J/g/°C],
T_{M}: M gas temperature [°C], C_{M}: M gas specific heat [J/g/°C],
V_{M}: M gas flow rate [Nm³/min],
M_{M}: M gas molecular weight [g/mol] ${Q}_{out} = {\sum }_{{t}_{B}} \left\{\begin{matrix}\left({T}_{b}\times {C}_{bN 2}-{T}_{c}\times {C}_{CN 2}\right) \times {V}_{b} \times 0.79 \times 1000 / 22.4 \\ \times {M}_{N 2} + \left({T}_{b}\times {C}_{bO 2}-{T}_{c}\times {C}_{CO 2}\right) \\ \times \left({V}_{b}\times 0.21+{V}_{O 2}-{V}_{OXY}\right) \times 1000 / 22.4 \times {M}_{O 2} \\ + \left({T}_{b}\times {C}_{bmoi}-{T}_{C}\times {C}_{Cmoi}\right) \times \left({V}_{b}\times moi\right)\end{matrix}\right\}$
t_{B}: blast duration [min], T_{b}: blast temperature [°C],
C_{bN2}: N₂ specific heat corresponding to 1200°C [J/g/°C],
T_{C}: cold blast temperature [°C],
C_{CN2}: N₂ specific heat corresponding to 200°C [J/g/°C],
Vb: blast flow rate [Nm³/min],
M_{N2}: N₂ molecular weight [g/mol],
C_{bO2}: O₂ specific heat corresponding to 1200°C [J/g/°C],
C_{CO2}: O₂ specific heat corresponding to 200°C [J/g/°C],
V_{O2}: total O₂ flow rate O₂ [Nm³/min],
V_{OXY}: oxygen flow rate [Nm³/min], M_{O2}: O₂ specific heat [J/g/°C],
C_{bmoi}: vapor specific heat corresponding to 1200°C [J/g/°C],
C_{Cmoi}: vapor specific heat corresponding to 200°C [J/g/°C],
moi: blast moisture [g/Nm³] $η = {Q}_{out} / {Q}_{in}$ ${Q}_{inHS} = {Q}_{out} / η$ $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$
α: air-fuel ratio

2. The combustion control method for a hot blast stove according to claim 1, further comprising the steps of:
calculating an estimation value Q_{out estimation} of the quantity of heat to be deprived of by generating the hot blast by using the following Equation (6) in a case where blast specifications of the blast furnace are modified;
calculating a quantity of heat required for obtaining the estimation value Q_{out estimation} of the quantity of heat as a required quantity of heat input Q_{in estimation} by using the following Equation (7); and
controlling the hot blast stove based on the calculated required quantity of heat input Q_{in estimation}. $\begin{matrix}{Q}_{out estimation} \\ = {\sum }_{{t}_{B}} \left\{\begin{matrix}\left({T}_{b set}\times {C}_{bN 2}-{T}_{c}\times {C}_{CN 2}\right) \times {V}_{b set} \times 0.79 \times 1000 / 22.4 \times {M}_{N 2} \\ + \left({T}_{b set}\times {C}_{bO 2}-{T}_{C}\times {C}_{CO 2}\right) \times \left({V}_{b set}\times 0.21+{V}_{O 2 set}-{V}_{OXY set}\right) \\ \times 1000 / 22.4 \times {M}_{O 2} + \left({T}_{b set}\times {C}_{bmoi}-{T}_{C}\times {C}_{Cmoi}\right) \times \left({V}_{b set}\times moi\right)\end{matrix}\right\}\end{matrix}$
T_{b set}: blast temperature set value,
V_{b set}: blast flow rate set value,
V_{O2 set}: total oxygen flow rate set value,
V_{OXY set}: oxygen flow rate set value ${Q}_{in estimation} = {Q}_{out estimation} / η$

3. The combustion control method for a hot blast stove according to claim 1 or 2, further comprising the steps of:
calculating a correction amount α of the actual thermal efficiency η by using an opening degree of a ventilation butterfly valve provided between the regenerator and a blower that supplies the cold blast to the regenerator after the blast sending step is finished; calculating a correction value η_{correction} of the actual thermal efficiency η by using the following Equation (8); and
using the calculated correction value η_{correction} for subsequent processing. ${η}_{correction} = η \pm α$

4. A combustion control device for a hot blast stove having a combustion step of storing, in a regenerator, a quantity of heat input by combusting a mixed gas, and a blast sending step of generating hot blast by supplying cold blast into the regenerator and supplying the generated hot blast to a blast furnace, the combustion control device comprising
a control unit configured to:
calculate an actual value of the quantity of heat as an actual quantity of heat input Qᵢₙ by using the following Equation (1);
calculate a quantity of heat deprived of by generating the hot blast as an actual quantity of heat output Qₒᵤₜ by using the following Equation (2);
calculate an actual value of thermal efficiency of the hot blast stove as an actual thermal efficiency η by using the following Equation (3);
calculate a quantity of heat to be input when hot blast is generated next time as a required quantity of heat input Q_{inHS} by using the following Equation (4);
calculate a quantity of the mixed gas V_{M_B} to be supplied when the hot blast is generated next time by using the following Equation (5); and
control the hot blast stove based on the calculated quantity of the mixed gas V_{M_B}. ${Q}_{in} = {\sum }_{{t}_{A}} \left(\begin{matrix}{k}_{M} \times {V}_{M} + {T}_{AIR} \times {C}_{AIR} \times {V}_{AIR} \times 1000 / 22.4 \times {M}_{AIR} \\ + {T}_{M} \times {C}_{M} \times {V}_{M} \times 1000 / 22.4 \times {M}_{M}\end{matrix}\right)$
t_{A}: combustion duration [min], k_{M}: M gas calorie [J/Nm³],
V_{M}: M gas flow rate [Nm³/min], T_{AIR}: combustion air temperature,
C_{AIR}: combustion air specific heat [J/g/°C],
V_{AIR}: combustion air flow rate [Nm³/min],
M_{AIR}: combustion air specific heat [J/g/°C],
T_{M}: M gas temperature [°C], C_{M}: M gas specific heat [J/g/°C],
V_{M}: M gas flow rate [Nm³/min],
M_{M}: M gas molecular weight [g/mol] ${Q}_{out} = {\sum }_{{t}_{B}} \left\{\begin{matrix}\left({T}_{b}\times {C}_{bN 2}-{T}_{c}\times {C}_{CN 2}\right) \times {V}_{b} \times 0.79 \times 1000 / 22.4 \\ \times {M}_{N 2} + \left({T}_{b}\times {C}_{bO 2}-{T}_{c}\times {C}_{CO 2}\right) \\ \times \left({V}_{b}\times 0.21+{V}_{O 2}-{V}_{OXY}\right) \times 1000 / 22.4 \times {M}_{O 2} \\ + \left({T}_{b}\times {C}_{bmoi}-{T}_{C}\times {C}_{Cmoi}\right) \times \left({V}_{b}\times moi\right)\end{matrix}\right\}$
t_{B}: blast duration [min], T_{b}: blast temperature [°C],
C_{bN2}: N₂ specific heat corresponding to 1200°C [J/g/°C],
T_{C}: cold blast temperature [°C],
C_{CN2}: N₂ specific heat corresponding to 200°C [J/g/°C],
Vb: blast flow rate [Nm³/min],
M_{N2}: N₂ molecular weight [g/mol],
C_{bO2}: O₂ specific heat corresponding to 1200°C [J/g/°C],
C_{CO2}: O₂ specific heat corresponding to 200°C [J/g/°C],
V_{O2}: total O₂ flow rate [Nm³/min],
V_{OXY}: oxygen flow rate [Nm³/min], M_{O2}: O₂ specific heat [J/g/°C],
C_{bmoi}: vapor specific heat corresponding to 1200°C [J/g/°C],
C_{Cmoi}: vapor specific heat corresponding to 200°C [J/g/°C],
moi: blast moisture [g/Nm³] $η = {Q}_{out} / {Q}_{in}$ ${Q}_{inHS} = {Q}_{out} / η$ $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$
α: air-fuel ratio

## Patentansprüche

1. Verbrennungssteuerungsverfahren für einen Winderhitzer, die einen Verbrennungsschritt des Speicherns einer Wärmemenge aufweißt, die durch Verbrennen eines Mischgases zugeführt wird, in einem Regenerator, und einem Heißwindabgabeschritt des Erzeugens von Heißwind durch Zuführen von Kaltwind in den Regenerator und Zuführen des erzeugten Heißwinds zu einem Hochofen, wobei das Verbrennungssteuerungsverfahren die folgenden Schritte umfasst:
Berechnen eines Istwerts der Wärmemenge als tatsächliche Wärmezufuhrmenge Qᵢₙ unter Verwendung der folgenden Gleichung (1);
Berechnen einer Wärmemenge, die durch Erzeugen des Heißwinds entzogen wird, als tatsächliche Wärmeabfuhrmenge Q_{Aus} unter Verwendung der folgenden Gleichung (2);
Berechnen eines Istwerts des thermischen Wirkungsgrads des Winderhitzers als tatsächlicher thermischer Wirkungsgrad η unter Verwendung der folgenden Gleichung (3);
Berechnen einer Wärmemenge, die dann zugeführt werden soll, wenn das nächste Mal Heißwind erzeugt wird, als erforderliche Wärmezufuhrmenge Q_{inHs} unter Verwendung der folgenden Gleichung (4);
Berechnen einer Menge des Mischgases V_{M_B} die dann zugeführt werden soll, wenn das nächste Mal Heißwind erzeugt wird, unter Verwendung der folgenden Gleichung (5); und
Steuern des Winderhitzers, basierend auf der berechneten Menge des Mischgases V_{M_B}. ${Q}_{in} = {\sum }_{tA} \left(\begin{matrix}{K}_{M} \times {V}_{M} + {T}_{AIR} \times {C}_{AIR} \times {V}_{AIR} \times 1000 / 22,4 \times {M}_{AIR} \\ + {T}_{M} \times {C}_{M} \times {V}_{M} \times 1000 / 22 , 4 \times {M}_{M}\end{matrix}\right)$
t_{A}: Verbrennungsdauer [min], RM: Heizwert des M-Gases [J/Nm³],
V_{M}: M-Gas-Volumenstrom [Nm³/min], TAIR: Temperatur der Verbrennungsluft,
C_{AIR}: spezifische Wärme der Verbrennungsluft [J/g/°C],
V_{AIR}: Volumenstrom der Verbrennungsluft [Nm³/min],
M_{AIR}: spezifische Wärme der Verbrennungsluft [J/g/°C],
T_{M}: M-Gas-Temperatur [°C], CM: spezifische Wärme des M-Gases [J/g/°C],
V_{M}: M-Gas-Volumenstrom [Nm³/min],
M_{M}: M-Gas-Molekulargewicht [g/mol] ${Q}_{Aus} = {\sum }_{tB} \left\{\begin{matrix}\left({T}_{b}\times {C}_{bN 2}-{T}_{c}\times {C}_{CN 2}\right) \times {V}_{b} x 0 , 79 \times 1000 / 22 , 4 \\ X {M}_{N 2} + \left({T}_{b}\times {C}_{b 02}-{T}_{c}\times {C}_{co 2}\right) \\ \times \left({V}_{b}\times 0,21+{V}_{02}-{V}_{OXY}\right) \times 1000 / 22 , 4 \times {M}_{02} \\ + \left({T}_{b}\times {C}_{bmoi}-{T}_{c}\times {C}_{Cmoi}\right) \times \left({V}_{b}\times moi\right)\end{matrix}\right\}$
t_{B}: Heißwinddauer [min], Tb: Heißwindtemperatur [°C],
C_{bN2}: N₂ -spezifische Wärme entsprechend 1200°C [J/g/°C],
T_{c}: Temperatur von Kaltwind [°C],
C_{CN2}: N₂ -spezifische Wärme entsprechend 200°C [J/g/°C],
V_{b}: Heißwind-Volumenstrom [Nm³/min],
M_{N2}: N₂ Molekulargewicht [g/mol],
C_{boz}: O₂ -spezifische Wärme entsprechend 1200°C [J/g/°C],
C_{coa}: O₂ -spezifische Wärme entsprechend 200°C [J/g/°C],
V_{O2}: Gesamt-O₂ -Volumenstrom O₂ [Nm³/min],
V_{OXY}: Sauerstoff-Volumenstrom [Nm³/min], M_{O2}: O₂ -spezifische Wärme [J/g/°C],
C_{bmoi}: Dampf-spezifische Wärme entsprechend 1200°C [J/g/°C],
C_{cmoi}: Dampf-spezifische Wärme entsprechend 200°C [J/g/°C],
moi: Heißwindfeuchte [g/Nm³] $η = {Q}_{Aus} / {Q}_{in}$ ${Q}_{inHS} = {Q}_{Aus} / η$ $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$
*α*: Luft-Brennstoff-Verhältnis

2. Verbrennungssteuerungsverfahren für einen Winderhitzer nach Anspruch 1, weiter umfassend die folgenden Schritte:
Berechnen eines Schätzwerts Q_{Aus Schätzung} der Wärmemenge, die durch Erzeugen des Heißwinds entzogen werden soll, unter Verwendung der folgenden Gleichung (6) in einem Fall, in dem Heißwindspezifikationen des Hochofens geändert werden;
Berechnen einer Wärmemenge, die zum Erhalten des Schätzwerts Q_{Aus Schätzung} der Wärmemenge erforderlich ist, als erforderliche Wärmezufuhrmenge Q_{In Schätzung} unter Verwendung der folgenden Gleichung (7); und
Steuern des Winderhitzers, basierend auf der berechneten erforderlichen Wärmezufuhrmenge Q_{In Schätzung,} $\begin{matrix}{Q}_{Aus Schätzung} \\ = {\sum }_{Tb} \left\{\begin{matrix}\left({T}_{bset}\times {C}_{bN 2}-{T}_{c}\times {C}_{CN 2}\right) \times {V}_{b set} \times 0 , 79 \times 1000 / 22 , 4 \times {M}_{N 2} \\ + \left({T}_{b set}\times {C}_{bO 2}-{T}_{c}\times {C}_{cO 2}\right) \times \left.{V}_{b set}\times 0,21+{V}_{O 2 set}-{V}_{OXY set}\right) \\ \times 1000 / 22 , 4 \times {M}_{O 2} + \left({T}_{b set}\times {C}_{bmoi}-{T}_{c}\times {C}_{cmoi}\right) \times \left({V}_{b set \times moi}\right)\end{matrix}\right\}\end{matrix}$
T_{b set}: Heißwindtemperatur-Sollwert,
V_{b set}: Heißwind-Volumenstrom-Sollwert,
V_{O2 set}: Gesamt-Sauerstoff-Volumenstrom-Sollwert,
V_{OXY} set: Sauerstoff-Volumenstrom-Sollwert ${Q}_{in Schätzung} = {Q}_{Aus Schätzung} / η$

3. Verbrennungssteuerungsverfahren für einen Winderhitzer nach Anspruch 1 oder 2, weiter umfassend die folgenden Schritte:
Berechnen eines Korrekturbetrags α des tatsächlichen thermischen Wirkungsgrads *η* unter Verwendung von einem Öffnungsgrad eines Belüftungs-Absperrklappenventils, das zwischen dem Regenerator und einem Gebläse angeordnet ist, das den Kaltwind dem Regenerator zuführt, nachdem der Heißwindabgabeschritt beendet ist; Berechnen eines Korrekturwerts η_{correction} des tatsächlichen thermischen Wirkungsgrads η unter Verwendung der folgenden Gleichung (8); und
unter Verwendung von dem berechneten Korrekturwert *η*_{correction} für die nachfolgende Verarbeitung. ${η}_{correction} = η \pm α$

4. Verbrennungssteuervorrichtung für einen Winderhitzer, die einen Verbrennungsschritt des Speicherns einer Wärmemenge aufweißt, die durch Verbrennen eines Mischgases zugeführt wird, in einem Regenerator und einem Heißwindabgabeschritt des Erzeugens von Heißwind durch Zuführen von Kaltwind in den Regenerator und Zuführen des erzeugten Heißwinds zu einem Hochofen, die Verbrennungssteuervorrichtung umfassend
eine Steuereinheit, dazu ausgebildet:
einen Istwert der Wärmemenge als tatsächliche Wärmezufuhrmenge Qᵢₙ unter Verwendung der folgenden Gleichung (1) zu berechnen;
eine Wärmemenge, die durch Erzeugen des Heißwinds entzogen wird, als tatsächliche Wärmeabfuhrmenge Q_{Aus} unter Verwendung der folgenden Gleichung (2) zu berechnen;
einen Istwert des thermischen Wirkungsgrads des Winderhitzers als tatsächlicher thermischer Wirkungsgrad *η* unter Verwendung der folgenden Gleichung (3) zu berechnen;
eine Wärmemenge, die dann zugeführt werden soll, wenn das nächste Mal Heißwind erzeugt wird, als erforderliche Wärmezufuhrmenge Q_{inHs} unter Verwendung der folgenden Gleichung (4) zu berechnen;
eine Menge des Mischgases V_{M_B} die dann zugeführt werden soll, wenn das nächste Mal Heißwind erzeugt wird, unter Verwendung der folgenden Gleichung (5) zu berechnen; und
den Winderhitzer basierend auf der berechneten Menge des Mischgases V_{M_B} zu steuern. ${Q}_{in} = {\sum }_{tA} \left(\begin{matrix}{k}_{M} \times {V}_{M} + {T}_{AIR} \times {C}_{AIR} \times {V}_{AIR} \times 1000 / 22,4 \times {M}_{AIR} \\ + {T}_{M} \times {C}_{M} \times {V}_{M} \times 1000 / 22 , 4 \times {M}_{M}\end{matrix}\right)$
t_{A}: Verbrennungsdauer [min], K_{M}: Heizwert des M-Gases [J/Nm³],
V_{M}: M-Gas-Volumenstrom [Nm³/min], T_{AIR}: Verbrennungslufttemperatur,
C_{AIR}: spezifische Wärme der Verbrennungsluft [J/g/°C],
V_{AIR}: Verbrennungsluft-Volumenstrom [Nm³/min],
M_{AIR}: spezifische Wärme der Verbrennungsluft [J/g/°C],
T_{M}: Temperatur des M-Gases [°C], C_{M}: spezifische Wärme des M-Gases [J/g/°C],
V_{M}: M-Gas-Volumenstrom [Nm³/min],
M_{M}: M-Gas-Molekulargewicht [g/mol] ${Q}_{Aus} = \sum {t}_{B} \left\{\begin{matrix}\left({T}_{b}\times {C}_{bN 2}-{T}_{c}\times {C}_{CN 2}\right) \times {V}_{b} \times 0 , 79 \times 1000 / 22 , 4 \\ \times {M}_{N 2} + \left({T}_{b}\times {C}_{b 02}-{T}_{c}\times {C}_{co 2}\right) \\ \times \left({V}_{b}\times 0,21+{V}_{02}-{V}_{OXY}\right) \times 1000 / 22 , 4 \times {M}_{02} \\ + \left({T}_{b}\times {C}_{bmol}-{T}_{c}\times {C}_{cmol}\right) \times \left({V}_{b}\times moi\right)\end{matrix}\right\}$
t_{B}: Heißwinddauer [min], T_{b}: Heißwindtemperatur [°C],
C_{bN2}: N₂ -spezifische Wärme entsprechend 1200°C [J/g/°C],
T_{c}: Temperatur von Kaltwind [°C],
C_{CN2}: N₂ -spezifische Wärme entsprechend 200°C [J/g/°C],
V_{b}: Heißwind-Volumenstrom [Nm³/min],
M_{N2}: N₂ Molekulargewicht [g/mol],
C_{bo2}: O₂ -spezifische Wärme entsprechend 1200°C [J/g/°C],
C_{co2}: O₂ -spezifische Wärme entsprechend 200°C [J/g/°C],
V₀₂: Gesamt-O₂ -Volumenstrom [Nm³/min],
V_{OXY}: Sauerstoff-Volumenstrom [Nm³/min], M₀₂: O₂ -spezifische Wärme [J/g/°C],
C_{bmoi}: Dampf-spezifische Wärme entsprechend 1200°C [J/g/°C],
C_{cmoi}: Dampf-spezifische Wärme entsprechend 200°C [J/g/°C], moi: Heißwindfeuchte [g/Nm³] $η = {Q}_{Aus} / {Q}_{in}$ ${Q}_{inHS} = {Q}_{Aus} / η$ $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$
α: Luft-Brennstoff-Verhältnis

## Revendications

1. Procédé de commande de combustion pour un four à vent chaud présentant une étape de combustion consistant à stocker, dans un régénérateur, une quantité de chaleur introduite par combustion d'un gaz mixte, et une étape de soufflage consistant à générer un vent chaud en fournissant un vent froid dans le régénérateur et en fournissant le vent chaud généré à un haut fourneau, le procédé de commande de combustion comprenant les étapes de :
calcul d'une valeur réelle de la quantité de chaleur en tant que quantité réelle de chaleur introduite Qᵢₙ en utilisant l'équation (1) suivante ;
calcul d'une quantité de chaleur extraite par génération du vent chaud en tant que quantité réelle de chaleur délivrée en sortie Qₒᵤₜ en utilisant l'équation (2) suivante ;
calcul d'une valeur réelle du rendement thermique du four à vent chaud en tant que rendement thermique réel η en utilisant l'équation (3) suivante ;
calcul d'une quantité de chaleur à introduire lorsque le vent chaud est généré la fois suivante en tant que quantité requise de chaleur introduite Q_{inHs} en utilisant l'équation (4) suivante ;
calcul d'une quantité du gaz mixte V_{M_B} à fournir lorsque le vent chaud est généré la fois suivante en utilisant l'équation (5) suivante ; et
commande du four à vent chaud sur la base de la quantité calculée du gaz mixte V_{M_B}. ${Q}_{in} = {\sum }_{tA} \left(\begin{matrix}{K}_{M} \times {V}_{M} + {T}_{AIR} \times {C}_{AIR} \times {V}_{AIR} \times 1000 / 22,4 \times {M}_{AIR} \\ + {T}_{M} \times {C}_{M} \times {V}_{M} \times 1000 / 22 , 4 \times {M}_{M}\end{matrix}\right)$
t_{A} : durée de combustion [min], RM : pouvoir calorifique du gaz M [J/Nm³],
V_{M} : débit du gaz M [Nm³/min], T_{AIR} : température de l'air de combustion,
C_{AIR} : chaleur spécifique de l'air de combustion [J/g/°C],
V_{AIR} : débit de l'air de combustion [Nm³/min],
M_{AIR} : chaleur spécifique de l'air de combustion [J/g/°C],
T_{M} : température du gaz M [°C], C_{M} : chaleur spécifique du gaz M [J/g/°C],
V_{M} : débit du gaz M [Nm³/min],
M_{M} : masse molaire du gaz M [g/mol] ${Q}_{out} = {\sum }_{{t}_{B}} \left\{\begin{matrix}\left({T}_{b}\times {C}_{bN 2}-{T}_{c}\times {C}_{CN 2}\right) \times {V}_{b} \times 0 , 79 \times 1000 / 22 , 4 \\ \times {M}_{N 2} + \left({T}_{b}\times {C}_{b 02}-{T}_{c}\times {C}_{co 2}\right) \\ \times \left({V}_{b}\times 0,21+{V}_{O 2}-{V}_{OXY}\right) \times 1000 / 22 , 4 \times {M}_{02} \\ + \left({T}_{b}\times {C}_{bmoi}-{T}_{c}\times {C}_{Cmoi}\right) \times \left({V}_{b}\times moi\right)\end{matrix}\right\}$
t_{B} : durée de soufflage [min], Tb : température du vent [°C],
C_{bN2} : chaleur spécifique de N₂ correspondant à 1200 °C [J/g/°C],
T_{c} : température du vent froid [°C],
C_{CN2} : CHALEUR SPECIFIQUE DE N₂ correspondant à 200 °C [J/g/°C],
V_{b} : débit du vent [Nm³/min],
M_{N2}: MASSE MOLAIRE DE N₂ [g/mol],
C_{boz} : chaleur spécifique de 0₂ correspondant à 1200 °C [J/g/°C],
C_{coa} : chaleur spécifique de O₂ correspondant à 200 °C [J/g/°C],
V_{O2} : débit total d'O₂ O₂ [Nm³/min],
V_{OXY} : débit d'oxygène [Nm³/min], M_{O2} : chaleur spécifique de O₂ [J/g/°C],
C_{bmoi} : chaleur spécifique de la vapeur correspondant à 1200 °C [J/g/°C],
C_{cmoi} : chaleur spécifique de la vapeur correspondant à 200 °C [J/g/°C], moi : humidité du vent [g/Nm³] $η = {Q}_{out} / {Q}_{in}$ ${Q}_{inHS} = {Q}_{out} / η$ $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$
*α* : rapport air-combustible

2. Procédé de commande de combustion pour un four à vent chaud selon la revendication 1, comprenant en outre les étapes de :
calcul d'une valeur d'estimation Q_{out estimation} de la quantité de chaleur à extraire par génération du vent chaud en utilisant l'équation (6) suivante dans un cas où des spécifications de vent du haut fourneau sont modifiées ;
calcul d'une quantité de chaleur requise pour obtenir la valeur d'estimation Q_{out estimation} de la quantité de chaleur en tant que quantité requise de chaleur introduite Q_{In estimation} en utilisant l'équation (7) suivante ; et
commande du four à vent chaud sur la base de la quantité requise calculée de chaleur introduite Q_{In estimation} $\begin{matrix}{Q}_{out estimation} \\ = {\sum }_{Tb} \left\{\begin{matrix}\left({T}_{bset}\times {C}_{bN 2}-{T}_{c}\times {C}_{CN 2}\right) \times {V}_{b set} \times 0 , 79 \times 1000 / 22 , 4 \times {M}_{N 2} \\ + \left({T}_{b set}\times {C}_{bO 2}-{T}_{c}\times {C}_{cO 2}\right) \times {V}_{b set} X 0 , 21 + {V}_{O 2 set} - {V}_{OXY set} \\ \times 1000 / 22 , 4 \times {M}_{O 2} + \left({T}_{b set}\times {C}_{bmoi}-{T}_{c}\times {C}_{cmoi}\right) \times \left({V}_{b set \times moi}\right)\end{matrix}\right\}\end{matrix}$
T_{b set} : valeur de consigne de température du vent,
V_{b set} : valeur de consigne de débit du vent,
V_{O2 set} : valeur de consigne de débit total d'oxygène,
V_{OXY} set : valeur de consigne de débit d'oxygène ${Q}_{in estimation} = {Q}_{out estimation} / η$

3. Procédé de commande de combustion pour un four à vent chaud selon la revendication 1 ou la revendication 2, comprenant en outre les étapes de :
calcul d'une quantité de correction α du rendement thermique réel *η* en utilisant un degré d'ouverture d'une vanne papillon de ventilation disposée entre le régénérateur et une soufflante qui fournit le vent froid au régénérateur après que l'étape de soufflage est terminée ; calcul d'une valeur de correction η_{correction} du rendement thermique réel η en utilisant l'équation (8) suivante ; et
utilisation de la valeur de correction calculée *η*_{correction} pour un traitement ultérieur. ${η}_{correction} = η \pm α$

4. Dispositif de commande de combustion pour un four à vent chaud présentant une étape de combustion consistant à stocker, dans un régénérateur, une quantité de chaleur introduite par combustion d'un gaz mixte, et une étape de soufflage consistant à générer un vent chaud en fournissant un vent froid dans le régénérateur et en fournissant le vent chaud généré à un haut fourneau, le dispositif de commande de combustion comprenant
une unité de commande configurée pour :
calculer une valeur réelle de la quantité de chaleur en tant que quantité réelle de chaleur introduite Qᵢₙ en utilisant l'équation (1) suivante ;
calculer une quantité de chaleur extraite par génération du vent chaud en tant que quantité réelle de chaleur délivrée en sortie Qₒᵤₜ en utilisant l'équation (2) suivante ;
calculer une valeur réelle du rendement thermique du four à vent chaud en tant que rendement thermique réel *η* en utilisant l'équation (3) suivante ;
calculer une quantité de chaleur à introduire lorsque le vent chaud est généré la fois suivante en tant que quantité requise de chaleur introduite Q_{inHs} en utilisant l'équation (4) suivante ;
calculer une quantité du gaz mixte V_{M_B} à fournir lorsque le vent chaud est généré la fois suivante en utilisant l'équation (5) suivante ; et
commander le four à vent chaud sur la base de la quantité calculée du gaz mixte V_{M_B}. ${Q}_{in} = {\sum }_{tA} \left(\begin{matrix}{k}_{M} \times {V}_{M} + {T}_{AIR} \times {C}_{AIR} \times {V}_{AIR} \times 1000 / 22,4 \times {M}_{AIR} \\ + {T}_{M} \times {C}_{M} \times {V}_{M} \times 1000 / 22 , 4 \times {M}_{M}\end{matrix}\right)$
t_{A} : durée de combustion [min], K_{M} : pouvoir calorifique du gaz M [J/Nm³],
V_{M} : débit du gaz M [Nm³/min], T_{AIR} : température de l'air de combustion,
C_{AIR} : chaleur spécifique de l'air de combustion [J/g/°C],
V_{AIR} : débit de l'air de combustion [Nm³/min],
M_{AIR} : chaleur spécifique de l'air de combustion [J/g/°C],
T_{M} : température du gaz M [°C], C_{M} : chaleur spécifique du gaz M [J/g/°C],
V_{M} : débit du gaz M [Nm³/min],
M_{M} : masse molaire du gaz M [g/mol] ${Q}_{out} = \sum {t}_{B} \left\{\begin{matrix}\left({T}_{b}\times {C}_{bN 2}-{T}_{c}\times {C}_{CN 2}\right) \times {V}_{b} x 0 , 79 \times 1000 / 22 , 4 \\ \times {M}_{N 2} + \left({T}_{b}\times {C}_{b 02}-{T}_{c}\times {C}_{co 2}\right) \\ \times \left({V}_{b}\times 0,21+{V}_{O 2}-{V}_{OXY}\right) \times 1000 / 22 , 4 \times {M}_{O 2} \\ + \left({T}_{b}\times {C}_{bmol}-{T}_{c}\times {C}_{cmol}\right) \times \left({V}_{b}\times moi\right)\end{matrix}\right\}$
t_{B} : durée de soufflage [min], T_{b} : température du vent [°C],
C_{bN2} : chaleur spécifique de N₂ correspondant à 1200 °C [J/g/°C],
Tc : température du vent froid [°C],
C_{CN2} : chaleur spécifique de N₂ correspondant à 200 °C [J/g/°C],
Vb : débit du vent [Nm³/min],
M_{N2} : masse molaire de N₂ [g/mol],
C_{bo2} : chaleur spécifique de O₂ correspondant à 1200 °C [J/g/°C],
C_{co2} : chaleur spécifique de O₂ correspondant à 200 °C [J/g/°C],
V_{O2} : débit total d'O₂ [Nm³/min],
V_{OXY} : débit d'oxygène [Nm³/min], M_{O2} : chaleur spécifique de O₂ [J/g/°C],
C_{bmoi} : chaleur spécifique de la vapeur correspondant à 1200 °C [J/g/°C],
C_{cmoi} : chaleur spécifique de la vapeur correspondant à 200 °C [J/g/°C], moi : humidité du vent [g/Nm³] $η = {Q}_{out} / {Q}_{in}$ ${Q}_{inHS} = {Q}_{out} / η$ $\begin{matrix}{V}_{M _ B} = \\ \frac{{Q}_{inHS}}{{k}_{M} \times α \left({T}_{AIR}\times {C}_{AIR}\times 1000/22.4\times {M}_{AIR}\right) + {T}_{M} \times {C}_{M} \times 1000 / 22.4 \times {M}_{M}}\end{matrix}$
α : rapport air-combustible
